Europäisches Patentamt

European Patent Office

Office européen des brevets

(11) Veröffentlichungsnummer: **0 413 387 A1**

## (12) EUROPÄISCHE PATENTANMELDUNG

(21) Anmeldenummer: 90202167.4

(22) Anmeldetag: 10.08.90

(51) Int. Cl.5: **G02B 6/10, C03B 37/025**

(30) Priorität: 16.08.89 NL 8902073

(43) Veröffentlichungstag der Anmeldung:
20.02.91 Patentblatt 91/08

(84) Benannte Vertragsstaaten:
DE FR GB

(71) Anmelder: **N.V. Philips' Gloeilampenfabrieken**
**Groenewoudseweg 1**
**NL-5621 BA Eindhoven(NL)**

(72) Erfinder: **Bachmann, Peter Klaus**
**c/o INT. OCTROOIBUREAU B.V., Prof.**
**Holstlaan 6**
**NL-5656 AA Eindhoven(NL)**
Erfinder: **Khoe, Giok Djan**
**c/o INT. OCTROOIBUREAU B.V., Prof.**
**Holstlaan 6**
**NL-5656 AA Eindhoven(NL)**
Erfinder: **Mahon, Cathal John**
**c/o INT. OCTROOIBUREAU B.V., Prof.**
**Holstlaan 6**
**NL-5656 AA Eindhoven(NL)**
Erfinder: **Lydtin, Hans-Jürgen**
**c/o INT. OCTROOIBUREAU B.V., Prof.**
**Holstlaan 6**
**NL-5656 AA Eindhoven(NL)**

(74) Vertreter: **Pennings, Johannes et al**
**Internationaal Octrooibureau B.V. Prof.**
**Holstlaan 6**
**NL-5656 AA Eindhoven(NL)**

(54) **Polarisationshaltige einwellige optische Faser.**

(57) Eine optische Faser vom Monomode-Typ, in der sich Licht in nur einem Polarisationsmodus fortpflanzt, wird aus einer Monomode-Viermantelfaser gebildet, wobei die Abmessung des Lichtfortpflanzungsteils der Faser in einer ersten Richtung senkrecht zu der Faserachsevon der Abmessung des Lichtfortpflanzungsteils in einer zweiten Richtung senkrecht zu der Faserachse und zu der ersten Richtung abweicht.

FIG. 1

EP 0 413 387 A1

## POLARISATIONSHALTIGE EINWELLIGE OPTISCHE FASER.

Die Erfindung bezieht sich auf eine optische Faser vom Monomode-Typ, in der sich Licht in nur einem einzigen Polarisationsmodus (single polarisation mode) fortpflanzt, sowie auf ein Verfahren zum Herstellen einer derartigen Faser. Insbesondere bezieht sich die Erfindung auf eine optische Faser, in der von dem eingestrahlten Licht ein Polarisationsmodus transportiert und der andere Polarisationsmodus gedämpft wird.

Der Erfindung liegt die Aufgabe zugrunde, eine derartige Faser auf einfache Art und Weise herzustellen, ohne Anwendung durch Spannung in der Faser hervorgerufene Doppelbrechung.

Diese Aufgabe wird nach der Erfindung gelöst durch eine optische Faser mit einem Kern und mindestens einem Mantel einer niedrigeren Brechzahl als die des Kerns, wobei diese Faser das Kennzeichen aufweist, daß sie mindestens vier, den Kern umgebene Mäntel aufweist, mit einer jeweils vom Kern nach außen hin abwechselnd niedrigeren Brechzahl als die des Kerns und einer höheren Brechzahl als die der angrenzenden Mäntel, aber niedriger als die des Kerns und daß die Abmessung mindestens des Lichtfortpflanzungsteils der Faser in einer ersten Richtung senkrecht zu der Faserachse von der Abmessung des Lichtfortpflanzungsteils in einer zweiten Richtung senkrecht zu der Faserachse und zu der erstgenannten Richtung abweicht.

Der Erfindung liegt die Entdeckung zugrunde, daß eine optische Faser vom sog. Monomode-Vierfachmanteltyp mit minimaler Dispersion über einen breiten Wellenlängenbereich beim Verringern des Gesamtdurchmessers der Faser für einen Teil des Lichtes in diesem Wellenlängenbereich undurchlässig wird.

Der Erfindung liegt weiterhin die Entdeckung zugrunde, daß dieser Effekt ebenfalls auftritt, wenn der Durchmesser einer solchen Monomode-Vierfachmantelfaser in nur einer Richtung senkrecht zu der Faserachse verringert wird.

Monomode-Fasern vom Vierfachmanteltyp mit minimaler Dispersion über einen breiten Wellenlängenbereich wurden, insofern Anmelderin feststellen konnte, zum ersten Mal von Cohen und Mammel in Electronics Letters vom 25. November 1982, Heft 18, Nr. 24, Seiten 1023 und 1024 in einem Artikel mit dem Titel: "Low-Loss Quadruple Clad Single Mode Light Guides with Dispersion below 2 ps/km nm over the 1,28 $\mu$m -1.65 $\mu$m Wavelength Range" beschrieben.

Eine Monomode-Faser mit mindestens vier Mänteln und einer minimalen Dispersion in dem Wellenlängenbereich, für den die Faser ausgelegt ist, läßt sich laut der zitierten Veröffentlichung und der veröffentlichten Britischen Patentanmeldung GB 2116744 wie folgt beschreiben.

Die Faser weist einen Kern mit der Brechzahl $n_c$ und mit einem Radius $R_c$ auf, wobei dieser Kern durch mindestens vier Mantelschichten umgeben wird, deren Brechzahlen und Radien durch $(n_1,R_1)$, $(n_2,R_2)$, $(n_3,R_3)$ bzw. $(n_4,R_4)$ bezeichnet werden und wobei gilt, daß

$$n_c > n_2 > n_4 > n_3 > n_1 \text{ und}$$
$$R_4 > R_3 > R_2 > R_1 > R_c.$$

Eine optische Faser dieser Art weist einen lichtleitenden Kern und einen durch den zweiten Mantel gebildeten lichtleitenden Ring auf. Dieser lichtleitende Ring leitet das Licht, das durch den ersten Mantel aus dem Kern weggleckt. Der Kern und der erste Mantel können derart bemessen werden, daß isbesondere die Dispersion minimiert wird, der zweite, dritte und vierte Mantel können dabei derart bemessen werden, daß insbesondere die Verluste bei großen Wellenlängen minimiert werden.

Eine derartige Faser kann durch eine geeignete Wahl der Parameter derart entworfen werden, daß beispielsweise in dem Wellenbereich von 1,3 $\mu$m bis 1,6 $\mu$, das Licht mit minimaler Dispersion und mit geringen Verlusten transportiert wird. Eine derartige Faser wird in der Technik auch als Faser vom "Single-Mode Dispersion flattened" Typ bezeichnet.

Eine optische Faser nach der vorliegende Erfindung läßt sich unter Anwendung einer ähnlichen Nomenklatur wie in der Britischen Patentschrift gebraucht, wie folgt beschreiben. Die Faser ist mit einem Kern mit der Brechzahl $n_c$ und mit einem ellipsenförmigen Querschnitt mit einer großen Achse $2a_c$ und einer kleinen Achse $2b_c$ versehen, wobei $a_c > b_c$, wobei dieser Kern durch mindestens vier Mantelschichten entsprechender Querschnittform mit den Brechzahlen $n_1$, $n_2$, $n_3$ und $n_4$ und mit den Achsen $(2a_1\ 2b_1)$, $(2a_2,\ 2b_2)$, $(2a_3,\ 2b_3)$, $(2a_4,\ 2b_4)$ umgeben ist, wobei jeweils für die Achsenpaare $(2a_n, 2b_n)$ gilt, daß $a_n > b_n$ ist und wobei :

$$n_c > n_2 > n_4 > n_3 > n_1$$
$$a_4 > a_3 > a_2 > a_1 > a_c \text{ und}$$
$$b_4 > b_3 > b_2 > b_1 > b_c .$$

Unter einem ellipsenförmigen Querschnitt wird ein Querschnitt verstanden, der entsteht, wenn ein zylinderförmiger Körper in einer Richtung senkrecht zu der Achse zusammengedrückt und in einer Richtung senkrecht zu der Achse sowie zu der Zusammendrückrichtung gedehnt wird.

Durch eine geeignete Wahl des Achsenverhältnisses $a_n$ und $b_n$ läßt sich erreichen, daß der Wellenlängenbereich, der mit minimaler Dispersion und mit geringen Verlusten in der a-Richtung durchgelassen wird, von demjenigen Wellenlängenbereich abweicht, der mit minimaler Dispersion und geringen Verlusten in der b-Richtung durchgelassen wird.

So kann die Faser dazu geeignet sein, in der einen Richtung Licht mit minimaler Dispersion und geringen Verlusten bis beispielsweise 1700 nm und in der anderen Richtung bis 1500 nm durchzulassen. Es wurde gefunden, daß in dem Fall von Licht in dem Wellenlängenbereich zwischen 1500 und 1700 nm nur ein Polarisationsmodus im wesentlichen transportiert und der andere Polarisationsmodus auf effektive Weise gedämpft wird.

Ausführungsbeispiele der Erfindung sind in der Zeichnung dargestellt und werden im folgenden näher beschrieben. Es zeigen:

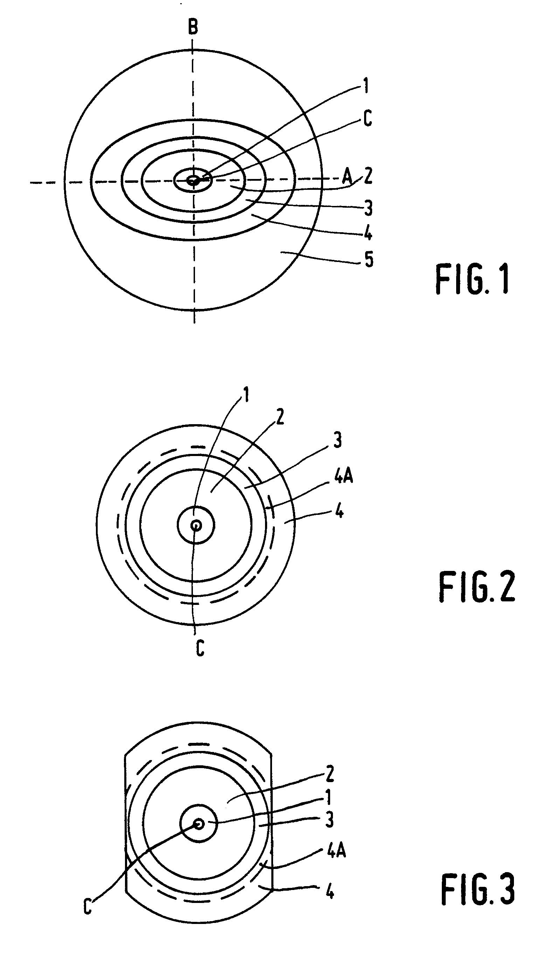

Fig.1 bis Fig. 3 jeweils einen Schnitt durch eine optische Faser während einer Anzahl Verfahrensschritte.

Fig. 1 zeigt einen Schnitt durch eine erfindungsgemäße Faser mit einem Kern c und einer Anzahl Mantelschichten 1 bis 5, wobei der Kern c und die Mantelschichten 1 bis 4 einen ellipsenförmigen Querschnitt haben. In der Figur ist gestrichelt ein Achsenkreuz (A, B) angegeben. Die Achsen $a_c$ und $b_c$ und $a_n$ und $b_n$, wobei n 1 bis 4 ist, fallen mit den Achsen A bzw. B zusammen. Aus der Figur geht hervor, daß der Kern und die vier Mantelschichten 1 bis 4 einen ellipsenförmigen Querschnitt haben. Das Ganze ist durch einen Mantel 5 wechselnder Dicke derart umgeben, daß die Faser am Außenumfang kreisförmig ist. Im Grunde ist dies aber zur einwandfreien Wirkung der Faser nicht unbedingt notwendig. Der in Fig. 1 dargestellte Faserquerschnitt wird durch Anwendung des ebenfalls erfundenen Verfahrens erhalten.

Fig. 2 zeigt einen Schnitt durch eine massive Vorform zum Ziehen einer erfindungsgemässen Faser. Eine derartige Vorform läßt sich wie folgt erzielen.

Auf die Innenseite einer Röhre 4 aus Quarzglas, das aus Quarzkristallen oder auf synthetischem Wege hergestellt ist, wird zunächst eine Schicht aus synthetischem Quarzglas 4A aufgebracht, danach eine Schicht 3 aus dotiertem Quarzglas mit einer niedrigeren Brechzahl als Quarzglas, beispielsweise aus fluordotiertem Quarzglas. Daraufhin wird eine Schicht 2 aus dotiertem Quarzglas mit einer höheren Brechzahl als Quarzglas aufgebracht, beispielsweise aus germaniumoxiddotiertem Quarzglas. Auf diese Schicht 2 wird eine Schicht 1 aus dotiertem Quarzglas mit einer niedrigeren Brechzahl als die von Quarzglas, beispielsweise ebenso wie die Schicht 3 aus fluordotiertem Quarzglas aufgebracht. Danach wird eine Schicht Kernmaterial c aufgebracht mit einer höheren Brechzahl als Quarzglas, beispielsweise ebenso wie die Schicht 2 aus germaniumdotiertem Quarzglas. Die Dotierungsmenge in den jeweiligen Schichten und die Dicken der aufgebrachten Schichten richten sich nach der Brechzahl und den relativen Dicken der Schichten, die in der schlußendlichen Vorform bzw. in der optischen Faser erhalten werden müßen und durch denjenigen Wellenlängenbereich bestimmt werden, in dem eine minimale Dispersion und geringe Verluste erhalten werden müßen. Die Art und Weise, wie diese Wahl bestimmt werden kann, ist dem Fachmann bekannt und in der zitierten Literatur beschrieben, wonach in diesem Zusammenhang ausdrücklich verwiesen wird, siehe beispielsweise die bereits genannte Britische Patentanmeldung GB 2116744. Die Röhre aus Quarzglas wird daraufhin zu einer massiven Vorvorm kollabiert, wobei eine Vorform mit einem Querschnitt wie in Fig. 2 dargestellt, erhalten wird.

In einer nächsten Herstellungsstufe werden Teile der Vorform parallel zu der Achse durch eine Schleifbearbeitung entfernt. Der abzuschleifende Teil beschränkt sich vorzugsweise auf das Material 4 und ggf. 4A, siehe Fig. 3. Die gebildeten Flächen liegen gegenüber der Achse der Vorform parallel und symmetrisch. Es gibt eine geringfügige oder gerade keine Berührung der Flächen mit dem Mantel 3.

Der erhaltene Körper wird danach in eine Quarzröhre gesteckt und auf übliche Weise gedehnt. Dabei entsteht eine Faser mit einem Querschnitt, wie dieser in Fig. 1 dargestellt ist. Die Faser ist am Außenumfang kreisrund, der Kern und die durch Auftragung aus der Gasphase erhaltenen Mantelschichten haben einen ellipsenförmigen Querschnitt.

Die erfindungsgemäße optische Faser bietet eine Anzahl Vorteile, die sich auf die Herstellung sowie auf die Wirkung beziehen. Es bedarf weder verwickelter Dotierungspläne und/oder zusätzlicher Elemente in der Faser noch spezieller Herstellungsschritte, wie dies oft der Fall ist bei Fasern, in denen durch in die Faser eingeführte Spannungen eine Doppelbrechung hervorgerufen wird. Im Betrieb der Faser wird der ursprüngliche Polarisationszustand beibehalten. Falls aus irgendeinem Grund in der Faser eine Störung in dem gewünschten Polarisationszustand auftritt, wird diese durch die Faser selbst korrigiert, und zwar dadurch, daß der unerwünschte Polarisationsmodus über die ganze Länge der Faser gedämpft wird.

**Ansprüche**

1. Optische Faser vom "Single Polarisation Mode"-Typ mit mindestens einem Kern und mindestens einem Mantel einer niedrigeren Brechzahl als die des Kerns, dadurch gekennzeichnet , daß die Faser mindestens vier, den Kern umgebene Mäntel aufweist, mit einer jeweils vom Kern nach außen hin abwechselnd niedrigeren Brechzahl als die des Kerns und einer höheren Brechzahl als die der angrenzenden Mäntel, aber niedriger als die des Kerns und daß die Abmessung mindestens des Lichtfortpflanzungsteils der Faser in einer ersten Richtung senkrecht zu der Faserachse von der Abmessung des Lichtfortpflanzungsteils in einer zweiten Richtung senkrecht zu der Faserachse und zu der erstgenannten Richtung abweicht.

2. Optische Faser nach Anspruch 1, dadurch gekennzeichnet , daß fie Faser mit einem Kern mit der Brechzahl $n_c$ und mit einem ellipsenförmigen Querschnitt mit einer großen Achse $2a_c$ und einer kleinen Achse $2b_c$ versehen ist, wobei $a_c > b_c$, wobei dieser Kern durch mindestens vier Mantelschichten entsprechender Querschnittform mit den Brechzahlen $n_1$, $n_2$, $n_3$ und $n_4$ und mit den Achsen $(2a_1, 2b_1)$, $(2a_2, 2b_2)$, $(2a_3, 2b_3)$, $(2a_4, 2b_4)$ umgeben ist, wobei jeweils für die Achsenpaare $(2a_n, 2b_n)$ gilt, daß $a_n > b_n$ ist und wobei :

$n_c > n_2 > n_4 > n_3 > n_1$
$a_4 > a_3 > a_2 > a_1 > a_c$ und
$b_4 > b_3 > b_2 > b_1 > b_c$ .

3. Verfahren zum Herstelklen einer optischen Faser vom "Single Polarisation Mode"-typ, dadurch gekennzeichnet , daß in einem ersten Verfahrensschritt auf übliche Weise eine massive Vorform für eine Faser mit einem Kern und mindestens vier Mantelschichten dadurch hergestellt wird, daß auf die Innenseite einer Rohre aus Quarzglas mit einem kreisförmigen Innenquerschnitt nacheinander Mantelmaterial und Kernmaterial aufgebracht und danach das Ganze zu einer massiven Vorform kollabiert wird, wobei die Vorform daraufhin mit zwei zueinander parallelen zu der Achse der Röhre parallel und symmetrisch liegenden Flächen versehen wird, wonach in einem folgenden Verfahrensschritt die Vorform zu einer Faser ausgezogen wird.

4. Verfahren nach Anspruch 3, dadurch gekennzeichne t, daß von der Vorform soviel Glas entfernt wird, daß die gebildeten Flächen den dritten Manten gerade oder gerade nicht berühren.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | GB-A-2 116 744 (WESTERN ELECTRIC CO.) * Seite 1, Zeile 35 - Seite 3, Zeile 30; Figuren 1-6 * | 1 | G 02 B 6/10 C 03 B 37/025 |
| D,A | ELECTRONICS LETTERS, Band 18, Nr. 24, 25. November 1982, Seiten 1023-1024; L.G. COHEN et al.: "Low-loss quadruple-clad single-mode lightguides with dispersion below 2 ps/km nm over the 1.28 mum- 1.65 mum wavelenght range" * Insgesamt * | 1,2 | |
| A | GB-A-2 012 983 (WESTERN ELECTRIC CO.) * Seite 1, Zeile 117 - Seite 5, Zeile 23; Figuren 1-15 * | 1,3,4 | |
| A | PATENT ABSTRACTS OF JAPAN, Band 10, Nr. 345 (C-386)[2401], 20. November 1986; & JP-A-61 146 725 (SUMITOMO ELECTRIC IND., LTD) 04-07-1986 | 3 | RECHERCHIERTE SACHGEBIETE (Int. Cl.5) |
| A | GB-A-2 104 239 (HITACHI CABLE LTD) * Seite 2, Zeile 21 - Seite 4, Zeile 58; Figuren 1-9 * | 1-3 | G 02 B 6/00 C 03 B 37/00 |

Der vorliegende Recherchenbericht wurde für alle Patentansprüche erstellt

| Recherchenort | Abschlußdatum der Recherche | Prüfer |
|---|---|---|
| DEN HAAG | 27-09-1990 | SARNEEL A.P.T. |

EPO FORM 1503 03.82 (P0463)